# EUROPEAN PATENT APPLICATION

(11) **EP 4 184 344 A1**
(43) Date of publication of application: **24.05.2023**
(21) Application number: 22203333.4
(22) Date of filing: 24.10.2022
(51) Int. Cl.: G06F 16/27, G06F 16/25, G06F 16/2458, G06F 16/21, G06Q 50/04

(54) **INFORMATION PROCESSING SYSTEM AND INFORMATION PROCESSING METHOD**

(30) Priority: 18.11.2021 JP 2021187663
(71) Applicant: OMRON Corporation, Kyoto 600-8530 (JP)
(72) Inventor: YACHIKU, Hideki, Kyoto-shi, 600-8530 (JP); FUKUDA, Koji, Kyoto-shi, 600-8530 (JP); SAITO, Serika, Kyoto-shi, 600-8530 (JP)
(74) Representative: Mewburn Ellis LLP

(57) **Abstract**

An information processing system (1) includes: a plurality of databases (160) divided for each topic; a topic management unit (450) configured to manage the topic included in the plurality of databases; and an acquisition unit (150) configured to specify, in response to a request designating the topic, a database corresponding to the designated topic, and request data from the specified database.

## Description

### BACKGROUND OF THE INVENTION

### Field of the Invention

The present invention relates to an information processing system and an information processing method related to data collection.

### Description of the Background Art

Along with progress of information communication technology, efforts to collect and utilize various data have been made.

For example, Japanese National Patent Publication No. 2020-503784 discloses a device including a composite object in an IoT network. In addition, Japanese Patent Laying-Open No. 2019-133610 discloses a data orchestration platform management method in a network communication environment including a plurality of data sources.

In addition, as a technique for searching collected data, Japanese National Patent Publication No. 2017-516213 discloses a configuration in which more advanced search engine optimization is added to current resource directory functionality that will provide a most efficient search result to an IoT or M2M device.

At a production site and the like, efforts to collect and utilize various data have been made. For example, when a plurality of production bases exist, it is convenient to construct a mechanism collecting the data for each base. On the other hand, in order to utilize the data scattered for each of the plurality of bases, a mechanism that can access each data is required, and a problem such as complication of a system or an increase in management cost may be generated.

### SUMMARY OF THE INVENTION

One object of the present invention is to provide a technique capable of efficiently using the data.

An information processing system according to one example of the present invention includes: a plurality of databases divided for each topic; a topic management unit configured to manage the topic included in the plurality of databases; and an acquisition unit configured to specify, in response to a request designating the topic, a database corresponding to the designated topic in response to a request designating the topic, and request data from the specified database. According to this configuration, even when the plurality of databases are distributedly disposed, the database corresponding to the designated topic can be specified, so that arbitrary data can be easily accessed without making a user to be aware of existence of the plurality of databases.

The information processing system may further include: a transmission unit configured to transmit transmission data that is associated with a topic and that includes data including one or more values to any one of the plurality of databases; and a plurality of data management units respectively associated with the plurality of databases. Each of the plurality of data management units may store the data included in the transmission data in an associated database based on the topic associated with the transmission data. According to this configuration, based on the topic included in the transmission data transmitted by the transmission unit, the data included in the transmission data can be stored in the corresponding area of the database.

When a new topic is added to the associated database, the data management unit may transmit topic information indicating the newly added topic to the topic management unit. According to this configuration, even when the new topic is added to any database, access to data associated with the newly added topic can be maintained.

When receiving the topic information from any one of the plurality of data management units, the topic management unit may transfer the received topic information to another data management unit. When receiving the topic information from the topic management unit, each of the plurality of data management units may store the received topic information. According to this configuration, the topic information from any one of the data management units is transferred to another data management unit, so that the topic information can be shared among all the data management units included in the information processing system.

When receiving the topic information from any one of the plurality of data management units, the topic management unit may store the received topic information. According to this configuration, each of the topic management units stores the topic information, so that a resource storing and processing the topic information can be reduced as compared with a case where the topic information is shared among all the data management units.

The topic management unit may determine whether same topic as the topic indicated by the topic information already exists in any of the plurality of databases. According to this configuration, a situation in which topics overlap among the plurality of databases can be avoided.

The topics may be described in a hierarchical structure. According to this configuration, the topic can be described in association with the configuration of the actual facility and the like.

The acquisition unit may request data from a corresponding database except for a topic part uniquely set in the corresponding database in request designating the topic. According to this configuration, processing for each database can be simplified.

An information processing method according to another example of the present invention includes: managing a plurality of databases divided for each topic; managing topics included in the plurality of databases; and in response to a request designating the topic, specifying a database corresponding to the designated topic and requesting data from the specified database.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram illustrating an application example of an information processing system according to an embodiment.
Fig. 2 is a schematic diagram illustrating an overall configuration example of the information processing system of the embodiment.
Fig. 3 is a schematic diagram illustrating a configuration example of a server device in the information processing system of the embodiment.
Fig. 4 is a block diagram illustrating a hardware configuration example of the server device in the information processing system of the embodiment.
Fig. 5 is a block diagram illustrating a hardware configuration example of a transmission device in the information processing system of the embodiment.
Fig. 6 is a schematic diagram illustrating a functional configuration example implementing data collection processing of the information processing system of the embodiment.
Fig. 7 is a schematic diagram illustrating an example of the information processing system of the embodiment.
Fig. 8 is a flowchart illustrating a processing procedure executed by the server device related to the data collection processing of the information processing system of the embodiment.
Fig. 9 is a schematic diagram illustrating an example of a database of the server device in the information processing system of the embodiment.
Fig. 10 is a schematic diagram illustrating a functional configuration example implementing data reference processing of the information processing system of the embodiment.
Figs. 11A and 11B are schematic diagrams illustrating an example of a topic information table of the information processing system of the embodiment.
Fig. 12 is a sequence diagram illustrating a processing procedure related to the data reference processing of information processing system of the embodiment.
Fig. 13 is a schematic diagram illustrating another functional configuration example implementing the data reference processing of the information processing system of the embodiment.
Fig. 14 is a schematic diagram illustrating a functional configuration example implementing duplication collection processing of the information processing system of the embodiment.
Fig. 15 is a schematic diagram illustrating totalization processing of the information processing system of the embodiment.

### DESCRIPTION OF THE PREFERRED EMBODIMENT

With reference to the drawings, an embodiment of the present invention will be described in detail. The same or equivalent part in the drawings is denoted by the same reference numeral, and the description will not be repeated.

### <A. Application example>

An example of a scene to which the present invention is applied will be described.

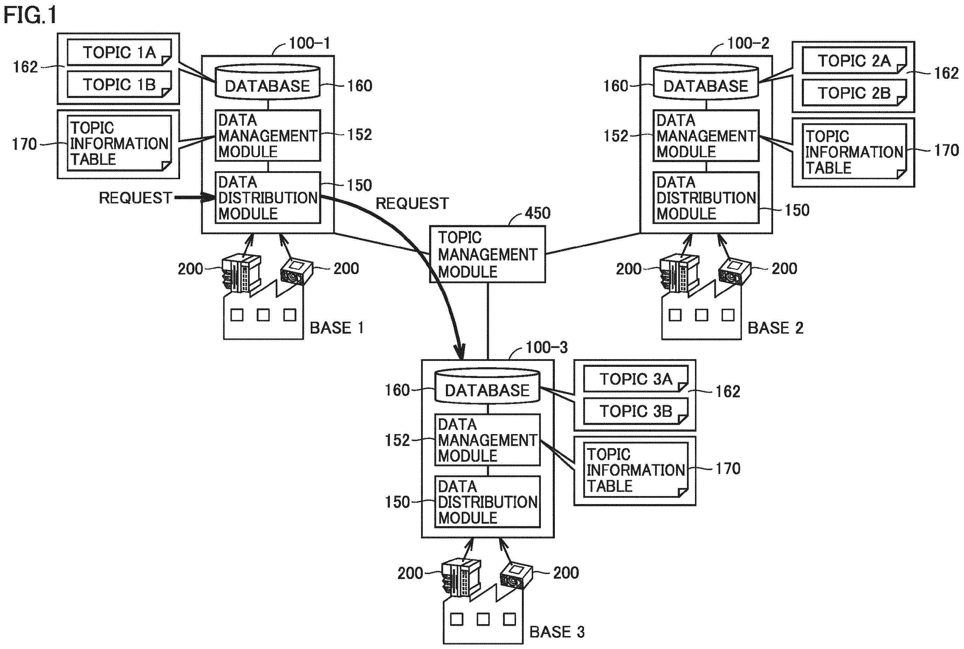

Fig. 1 is a schematic diagram illustrating an application example of an information processing system 1 according to an embodiment. With reference to Fig. 1, information processing system 1 includes a plurality of server devices 100-1, 100-2, 100-3,... (hereinafter, also collectively referred to a "sever device 100") and one or more transmission devices 200 associated with any one of server devices 100.

For example, it is assumed that server devices 100-1 to 100-3 are disposed in base 1 to 3. Each of server devices 100 stores data from one or more transmission devices 200 associated with server device 100 in a database 160. Database 160 stores one or more tables 162 for each topic. That is, database 160 is divided for each topic.

Each of server devices 100 includes a data distribution module 150 and a data management module 152 in addition to database 160.

Data management module 152 is associated with database 160 of the own device. Each of data management modules 152 stores the data included in transmission data 50 in associated database 160 based on the topic associated with transmission data 50. In this manner, data management module 152 stores the data (to which the topic is added) from transmission device 200 in table 162 corresponding to the added topic. In addition, data management module 152 includes a topic information table 170 indicating the topic of other server devices 100.

Data distribution module 150 relays the data from transmission device 200 and exchanges the data with another server device 100. More specifically, in response to a request designating the topic, data distribution module 150 specifies the database (server device 100) corresponding to the designated topic and requests the data from the specified database. At this time, data distribution module 150 may refer to topic information table 170 to specify (server device 100) corresponding to the designated topic.

Thus, even when the plurality of server devices 100 are disposed in a distributed manner, the data stored in arbitrary server device 100 can be referred to without causing the user to be aware that the server devices are distributed.

### <B. Overall configuration example of information processing system>

Information processing system 1 of the embodiment mainly collects the data from a production site, but a target collecting the data is not particularly limited.

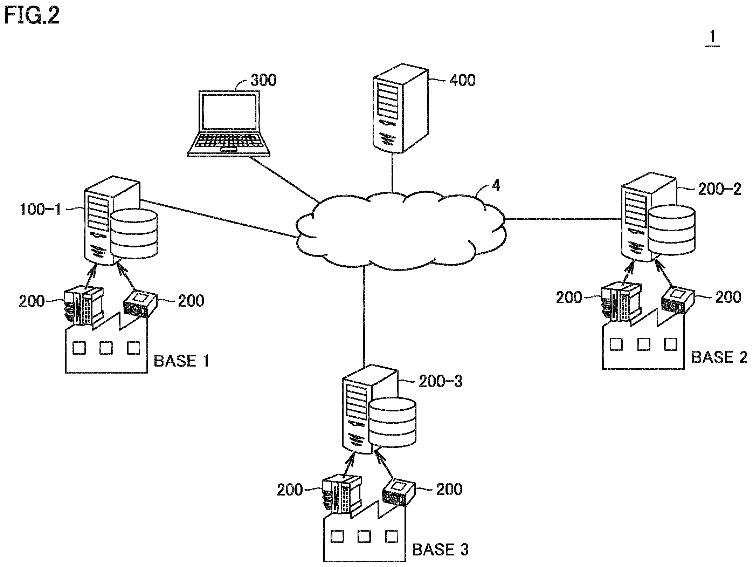

Fig. 2 is a schematic diagram illustrating an overall configuration example of information processing system 1 of the embodiment. With reference to Fig. 2, information processing system 1 includes the plurality of server devices 100-1, 100-2, 100-3,..., one or more transmission devices 200 associated with any one of server devices 100, one or more information processing devices 300, and a management device 400.

Server device 100 and management device 400 are typically connected to each other through a global network 4 such as the Internet.

Each of server devices 100 has a database, stores the data transmitted from one or more connected transmission devices 200, and executes required information processing. In addition, server device 100 provides a part or all of the stored data in response to the request from management device 400 or the like.

In the configuration example of Fig. 2, server device 100-1 is disposed in base 1, server device 100-2 is disposed in base 2, and server device 100-3 is disposed in base 3.

Each of transmission devices 200 collects predetermined data from the production site or the like, and transmits the data to server device 100.

Management device 400 executes processing for linking the plurality of server devices 100.

Information processing device 300 accesses the data stored in server device 100. In information processing system 1 of the embodiment, information processing device 300 can access the database included in each of the plurality of server devices 100. Furthermore, the user of information processing device 300 may not be made aware of which server device 100 the access destination database belongs to.

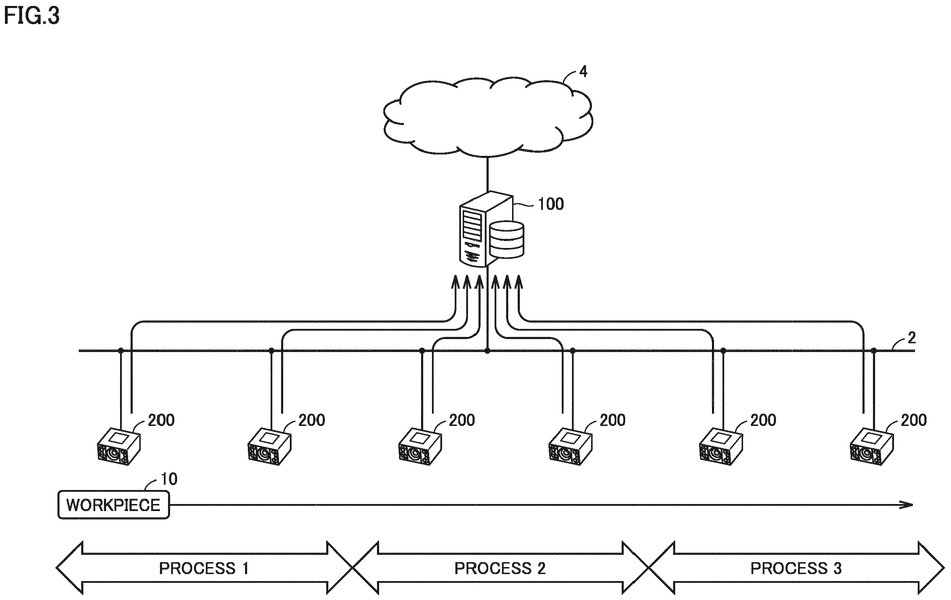

Fig. 3 is a schematic diagram illustrating a configuration example of server device 100 in information processing system 1 of the embodiment. With reference to Fig. 3, for example, server device 100 disposed in each base stores data transmitted from transmission device 200 through a local network 2 and executes required information processing. In addition, server device 100 provides the stored data in response to a totalization request from information processing device 300 or the like.

Each of transmission devices 200 collects predetermined data from the production site or the like, and transmits the data to server device 100. The timing at which transmission device 200 transmits data to server device 100 can be arbitrarily determined.

As illustrated in Fig. 3, assuming a line in which workpiece 10 becomes a product through a plurality of processes, each of transmission devices 200 is disposed in any process, and transmits the data collected from workpiece 10 passing through each process to server device 100. Server device 100 stores the data transmitted from transmission device 200 through local network 2.

### <C. Hardware configuration>

An example of a hardware configuration of a device constituting information processing system 1 according to the embodiment will be described below.

### (c1: Server device 100)

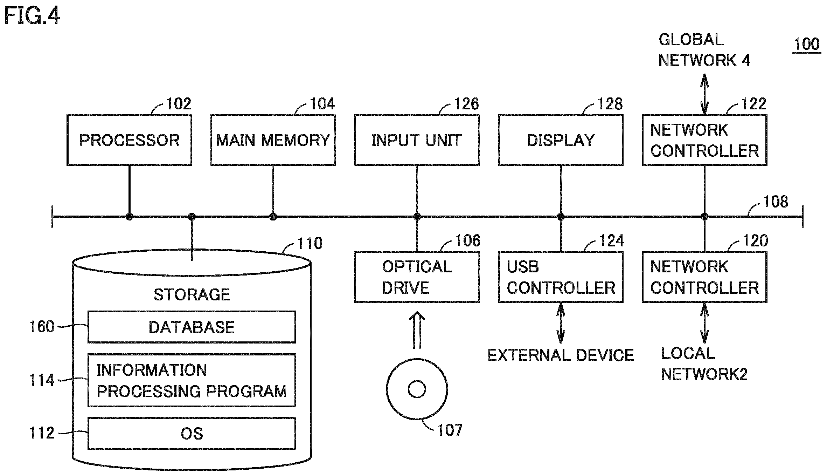

Fig. 4 is a block diagram illustrating a hardware configuration example of server device 100 in the information processing system 1 of the embodiment. With reference to Fig. 4, server device 100 includes one or more processors 102 such as a central processing unit (CPU) and a micro-processing unit (MPU), a main memory 104, an optical drive 106, a storage 110, network controllers 120, 122, a universal serial bus (USB) controller 124, an input unit 126, and a display 128. These components are connected to each other through a bus 108.

Processor 102 reads various programs stored in storage 110, develops the programs in main memory 104, and executes the programs, thereby implementing required processing in server device 100.

For example, storage 110 includes one or more nonvolatile storage devices such as a hard disk drive (HDD) or a flash solid state drive (SSD). Storage 110 typically stores an operating system (OS) 112 and an information processing program 114 implementing various processes described later. Required programs other than the program in Fig. 4 may be stored in storage 110.

Database 160 configured by the data collected from transmission device 200 may be implemented using a storage area of storage 110.

Server device 100 may include optical drive 106. Optical drive 106 reads a computer-readable program from a recording medium 107 (for example, an optical recording medium such as a digital versatile disc (DVD)) that non-transiently stores the program, and stores the program in storage 110 or the like.

Various programs executed by server device 100 may be installed through computer-readable recording medium 107, and may be installed by being downloaded from an arbitrary server on the network.

Network controller 120 controls data exchange with transmission device 200 and the like through local network 2. Network controller 122 controls data exchange with information processing device 300 and the like through global network 4.

USB controller 124 controls data exchange with an external device (for example, a support device) through USB connection.

Input unit 126 is configured of a touch panel, a mouse, a keyboard, and the like, and receives a user operation. Display 128 is configured of a display, various indicators, and the like, and outputs a processing result and the like from processor 102.

Although the configuration example in which necessary functions are provided by processor 102 executing the program has been described in Fig. 4, some or all of these provided functions may be implemented using a dedicated hardware circuit (for example, an application specific integrated circuit (ASIC) and a field-programmable gate array (FPGA)).

In addition, all or a part of the processing that server device 100 is in charge of may be executed using cloud computing on the network.

### (c2: Transmission device 200)

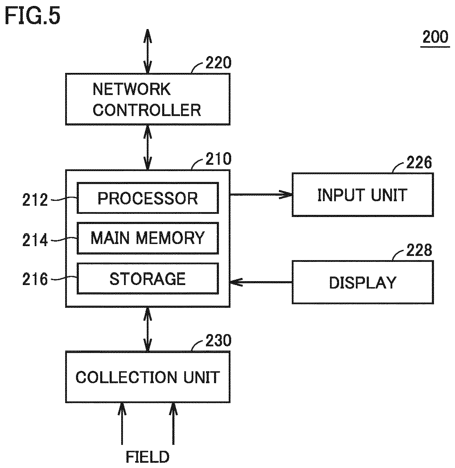

Fig. 5 is a block diagram illustrating a hardware configuration example of transmission device 200 in information processing system 1 of the embodiment. With reference to Fig. 5, transmission device 200 includes a processing circuit 210, a network controller 220, an input unit 226, a display 228, and a collection unit 230.

Processing circuit 210 includes a processor 212 such as a CPU or an MPU, a main memory 214, and a storage 216 such as a flash memory. Processor 212 reads various programs stored in storage 216, develops the programs in main memory 214, and executes the programs, thereby implementing required processing in transmission device 200.

Network controller 220 controls data exchange with server device 100 and the like through local network 2.

Input unit 226 is configured of a touch panel, a mouse, a keyboard, and the like, and receives a user operation. Display 228 is configured of a display, various indicators, and the like, and outputs a processing result and the like from processor 102. A touch panel display in which input unit 226 and display 228 are integrated may be adopted, or input unit 226 and display 228 may be omitted.

Collection unit 230 includes an arbitrary configuration collecting the data. For example, collection unit 230 can include an optical device that optically reads a two-dimensional or three-dimensional code applied to the workpiece or the like or an interface circuit that collects the data from an arbitrary measurement device.

Although the configuration example in which the required function is provided by processor 212 executing the program has been illustrated in Fig. 5, some or all of these provided functions may be mounted using the dedicated hardware circuit (for example, the ASIC or the FPGA). Alternatively, a main part of transmission device 200 may be implemented using hardware (for example, an industrial personal computer based on a general-purpose personal computer) according to a general-purpose architecture.

Furthermore, transmission device 200 may be implemented not by a single device but by cooperation of a plurality of devices. For example, transmission device 200 may be implemented by adding a communication interface generating and transmitting the transmission data to an existing sensor or a controller.

Furthermore, a function corresponding to transmission device 200 may be implemented as software executed by an arbitrary device. In this case, it may be implemented by adding software corresponding to transmission device 200 in addition to the software executed by the existing device.

### (c3: Information processing device 300)

Information processing device 300 of information processing system 1 of the embodiment is configured of a general personal computer or the like. A general personal computer is known, so that a detailed description thereof will not be given.

### (c4: Management device 400)

Because management device 400 of information processing system 1 of the embodiment has a hardware configuration similar to that of server device 100 illustrated in Fig. 4, detailed description thereof will not be repeated.

### <D. Data collection processing>

Data collection processing in information processing system 1 of the embodiment will be described below.

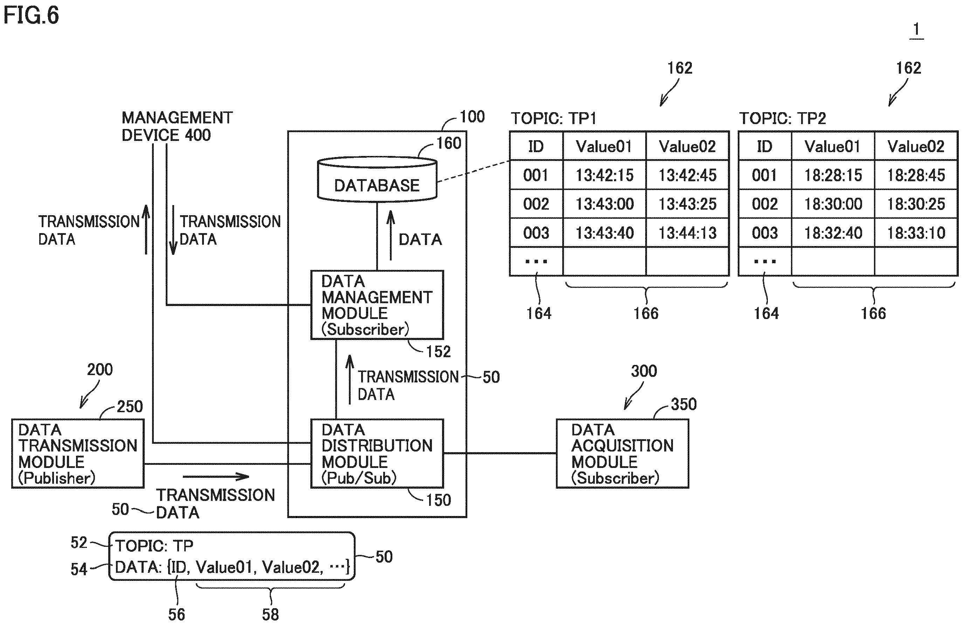

Fig. 6 is a schematic diagram illustrating a functional configuration example implementing the data collection processing of information processing system 1 of the embodiment. With reference to Fig. 6, in information processing system 1, server device 100 includes a data distribution module 150, a data management module 152, and a database 160. Transmission device 200 includes a data transmission module 250. Information processing device 300 includes a data acquisition module 350.

Data transmission module 250 of transmission device 200 corresponds to a transmission unit, and collects and transmits data. The data transmitted by data transmission module 250 is referred to as "transmission data 50". That is, data transmission module 250 of transmission device 200 transmits transmission data 50 that is associated with a topic and that includes data including one or more values to any of the plurality of server devices 100 (databases 160).

Transmission data 50 includes topic 52 that indicates the attribute of stored data 54. Data 54 stored in transmission data 50 includes one or more values 58 and ID 56 associated with the one or more values 58. ID 56 is the identification information specifying data 54.

Data distribution module 150 of server device 100 specifies topic 52 included in transmission data 50 received from data transmission module 250, and transfers transmission data 50 to data management module 152 and/or data acquisition module 350 that subscribes to specified topic 52. In addition, data distribution module 150 of server device 100 may transfer transmission data 50 received from data transmission module 250 to another server device 100 through management device 400. The distribution destination of transmission data 50 may be a plurality of modules. Data distribution module 150 may transfer all of received transmission data 50 to data management module 152.

Data acquisition module 350 of information processing device 300 notifies data distribution module 150 of the topic of the subscription target specified by the user. In addition, data acquisition module 350 notifies data distribution module 150 of the topic of the data desired to be acquired from among the stored data. In response to the notification, data distribution module 150 sends the data corresponding to the specified topic to data acquisition module 350.

The data management module 152 of the server device 100 stores the corresponding data 54 in database 160 based on the topic 52 included in transmission data 50 received from data distribution module 150. In this manner, data management module 152 specifies the storage destination of the data based on topic 52 included in transmission data 50, and stores data 54 included in transmission data 50 in the specified storage destination of the data.

Furthermore, data management module 152 of server device 100 may store the corresponding data 54 in database 160 based on topic 52 included in transmission data 50 received from another server device 100 through management device 400.

Data management module 152 may search the data stored in database 160 in response to the request from data distribution module 150. In addition, data management module 152 may be responsible for updating (including addition and deletion) the data structure of database 160. Furthermore, data management module 152 may perform an arbitrary operation on data 54 included in transmission data 50.

Database 160 is divided for each topic. More specifically, database 160 stores one or more tables 162 for each topic 52. Each table 162 stores an ID 164 and one or more values 166 in association with each other.

The topic is not limited to a single value as described above, but a hierarchical structure may be adopted. In the case of describing in the hierarchical structure, "relative notation" and/or "absolute notation" may be introduced. The "relative notation" indicates a route from an arbitrary reference, and may be a notation that does not start with "/" such as "line1/process1".

Furthermore, the "absolute notation" indicates a route that can be uniquely specified in the target system, and for example, notation starting with "/" such as "/Factory1/line1/process1" may be used. At this time, the head part (for example, "/Factory1/") of the absolute notation can be referred to as a global topic, and the subsequent part (for example, "line1/process1") can be referred to as a local topic. The relative notation can also be considered as the local topic without the global topic.

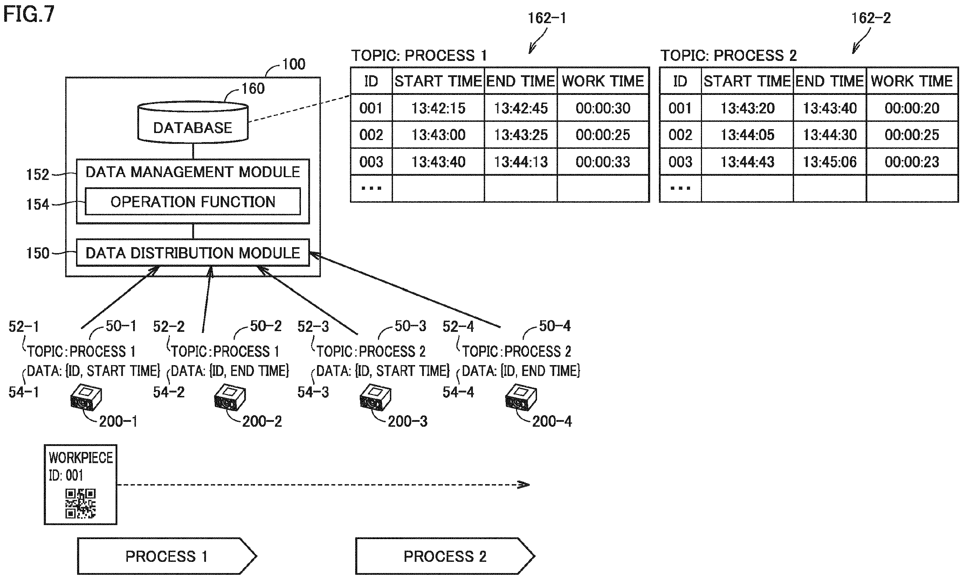

Fig. 7 is a schematic diagram illustrating an example of information processing system 1 of the embodiment. Fig. 7 illustrates an example in which workpiece 10 is processed in process 1 and process 2. Information processing system 1 collects the start time and the end time of processing on workpiece 10 in process 1 and process 2.

With reference to Fig. 7, workpiece 10 is conveyed by a conveyor or the like in the order of process 1 and process 2, and processing such as machining and assembly are performed in each process. A two-dimensional code 12 indicating an ID (001, 002, 003,...) specifying workpiece 10 is assigned to workpiece 10.

Transmission device 200 optically reads two-dimensional code 12 to acquire the ID of workpiece 10, and also acquires the time when the ID is acquired. Transmission device 200 is disposed at a processing start point or a processing end point of any process. Accordingly, transmission device 200 can transmit the start time or the end time of the processing on workpiece 10 to server device 100 in each process. That is, data 54 of transmission data 50 transmitted by transmission device 200 includes the ID of workpiece 10 and the start time or the end time.

More specifically, transmission device 200-1 is disposed at the processing start point of process 1, and transmission device 200-2 is disposed at the processing end point of process 1. Similarly, transmission device 200-3 is disposed at the processing start point of process 2, and transmission device 200-4 is disposed at the processing end point of process 2.

As described above, when workpiece 10 passes, each of transmission devices 200 optically reads two-dimensional code 12 assigned to workpiece 10, and transmits the time at which two-dimensional code 12 is optically read to server device 100. At this time, each of transmission devices 200 includes information specifying the disposed process in transmission data 50 as topic 52.

More specifically, when workpiece 10 passes (when the processing on workpiece 10 in process 1 is started), transmission device 200-1 generates the ID of workpiece 10 obtained by optically reading two-dimensional code 12 assigned to workpiece 10 and the start time that is the time when the ID of workpiece 10 is read as data 54-1. Then, transmission device 200-1 adds "process 1" to data 54-1 as topic 52-1 to generate transmission data 50-1, and transmits transmission data 50-1 to server device 100.

When receiving transmission data 50-1 from transmission device 200-1, server device 100 (data management module 152) specifies table 162-1 corresponding to "process 1" that is the value of topic 52-1 included in transmission data 50-1, and stores data 54-1 (the ID and the start time) included in transmission data 50-1. At this time, because a record to which ID 164 having the same value as "001" that is the value of the ID of data 54-1 is assigned does not exist, server device 100 adds the new record.

Subsequently, when workpiece 10 passes (when the processing on workpiece 10 in process 1 ends), transmission device 200-2 generates the ID of workpiece 10 obtained by optically reading two-dimensional code 12 assigned to workpiece 10 and the end time that is the time when the ID of workpiece 10 is read as data 54-2. Then, transmission device 200-2 adds "process 1" to data 54-2 as topic 52-2 to generate transmission data 50-2, and transmits transmission data 50-2 to server device 100.

When receiving transmission data 50-2 from transmission device 200-2, server device 100 (data management module 152) specifies table 162-1 corresponding to "process 1" that is the value of topic 52-2 included in transmission data 50-2, and stores data 54-2 (the ID and the end time) included in transmission data 50-2. At this time, because the record to which ID 164 having the same value as "001" that is the value of the ID of data 54-1 is assigned already exists, server device 100 stores the end time in the existing record.

In addition, server device 100 (an operation function 154 of data management module 152) calculates the difference between the start time and the end time as a work time for the record in which both the start time and the end time are stored. Then, server device 100 stores the calculated work time in the corresponding record.

Operation function 154 of data management module 152 is in charge of the processing of calculating the work time from the start time and the end time for each of workpieces 10. The calculation of the work time by operation function 154 may be any one as long as the corresponding start time and end time become complete. For example, the work time may be calculated immediately after the start time and the end time become complete, or the record in which the start time and the end time become complete may be extracted from the records included in table 162 every predetermined period, and the work time may be calculated for the extracted record.

When the processing in process 1 is completed, workpiece 10 is sent to process 2.

When workpiece 10 passes (when the processing on workpiece 10 in process 2 is started), transmission device 200-3 generates the ID of workpiece 10 obtained by optically reading two-dimensional code 12 assigned to workpiece 10 and the start time that is the time when the ID of workpiece 10 is read as data 54 -3. Then, transmission device 200-3 adds "process 2" to data 54 -3 as topic 52-3 to generate transmission data 50-3, and transmits transmission data 50-3 to server device 100.

Subsequently, when workpiece 10 passes (when the processing on workpiece 10 in process 2 ends), transmission device 200-4 generates the ID of workpiece 10 obtained by optically reading two-dimensional code 12 assigned to workpiece 10 and the end time that is the time when the ID of workpiece 10 is read as data 54 -4. Then, transmission device 200-4 adds "process 2" to data 54-4 as topic 52-4 to generate transmission data 50-4, and transmits transmission data 50-4 to server device 100.

When receiving transmission data 50-3 and transmission data 50-4 from transmission device 200-3 and transmission device 200-4, respectively, server device 100 (data management module 152) specifies table 162-2 corresponding to "process 2" and stores data 54 -2 and data 54 -4 included in transmission data 50-3, 50-4. In addition, server device 100 (operation function 154 of data management module 152) also calculates the difference between the start time and the end time as the work time for transmission data 50-3 and transmission data 50-4.

As described above, operation function 154 of data management module 152 executes the predetermined operation for a plurality of values (for example, "start time" and "end time") associated with the same ID, and adds a new value (for example, "work time").

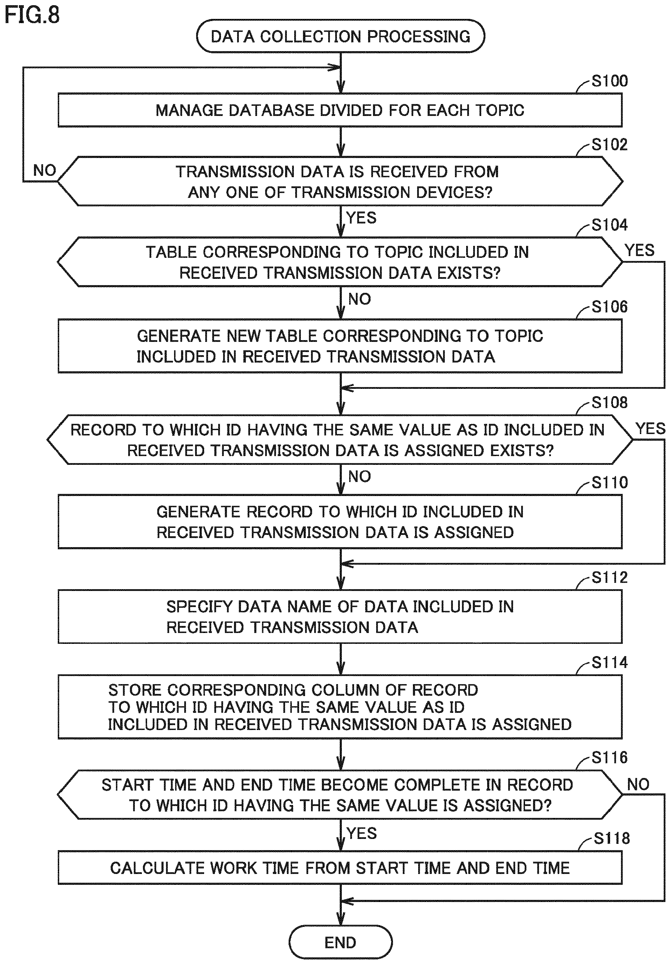

Fig. 8 is a flowchart illustrating a processing procedure executed by server device 100 related to the data collection processing of information processing system 1 of the embodiment. Typically, processor 102 of server device 100 executes information processing program 114 to implement each step in Fig. 8.

With reference to Fig. 8, server device 100 manages database 160 divided for each topic (step S100). Then, server device 100 determines whether transmission data 50 is received from any one of transmission devices 200 (step S102). That is, server device 100 determines whether transmission device 200 transmits transmission data 50 to server device 100. When transmission data 50 is not received (NO in step S102), the processing in step S102 is repeated.

When transmission data 50 is received (YES in step S102), server device 100 determines whether table 162 corresponding to topic 52 included in received transmission data 50 exists (step S104).

When table 162 corresponding to topic 52 included in received transmission data 50 does not exist (NO in step S104), server device 100 generates new table 162 corresponding to topic 52 included in received transmission data 50 (step S106).

In this manner, server device 100 specifies the storage destination of the data based on topic 52 included in transmission data 50.

When table 162 corresponding to topic 52 included in received transmission data 50 exists (YES in step S104), or after new table 162 is generated (after execution of step S106), server device 100 determines whether a record to which ID 164 having the same value as ID 56 included in received transmission data 50 is assigned exists (step S108).

When the record to which ID 164 having the same value as ID 56 included in received transmission data 50 is assigned does not exist (NO in step S108), server device 100 generates the record to which ID 56 included in received transmission data 50 is assigned as ID 164 (step S110).

Subsequently, server device 100 specifies the data name (start time or end time) of data 54 included in received transmission data 50 (step S112). Then, server device 100 stores value 58 included in data 54 included in received transmission data 50 in the corresponding column of the record to which ID 164 having the same value as ID 56 is assigned (step S114). In this manner, server device 100 stores data 54 included in transmission data 50 in the storage destination of the specified data. At this time, when the value associated with the same ID 56 as ID 164 included in transmission data 50 is already stored in database 160, server device 100 stores one or more values 58 included in data 54 included in transmission data 50 in association with ID 164 already stored in database 160.

Subsequently, server device 100 determines whether the start time and the end time become complete in the record to which ID 164 having the same value as ID 56 is assigned (step S116). In the record to which ID 164 having the same value as ID 56 is assigned, when the start time and the end time become complete (YES in step S116), server device 100 calculates the work time from the start time and the end time (step S118).

In the record to which ID 164 having the same value as ID 56 is assigned, when the start time and the end time do not become complete (NO in step S116), the processing in step S118 is skipped.

As described above, in each of process 1 and process 2, the time (work time) required for the work on workpiece 10 can be collected. Workpieces 10 are sequentially processed, the start time, so that the end time, and the work time can be used as the data analyzing an average value, variation, or the like of the work time required for each process by accumulating the start time, the end time, and the work time for all workpieces 10.

For convenience of description, the example including two processes has been described. However, even in the case where one or more processes are added, a flexible response can be ensured. For example, when process 3 is added, transmission device 200 is newly disposed in added process 3, and "process 3" is set as topic 52 for newly added transmission device 200. Thus, server device 100 generates table 162 corresponding to the new value of topic 52.

As illustrated in Fig. 7, different transmission devices 200 transmit the data (the start time and the end time) about the same workpiece 10 to server device 100 at different timings. Even in the case where a plurality of temporally distributed data are transmitted as described above, the required data can be aggregated for each workpiece 10 using topic 52 and ID 56.

### <E. Data reference processing>

Basic reference processing in information processing system 1 of the embodiment will be described below.

As described above, the data collected by each of server devices 100 is stored in database 160 of each of server devices 100.

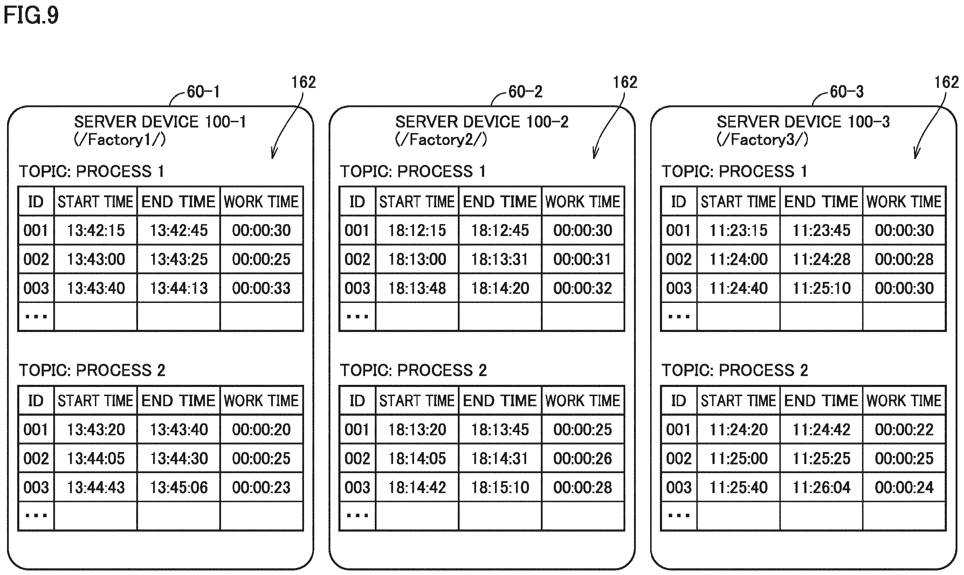

Fig. 9 is a schematic diagram illustrating an example of database 160 of server device 100 in information processing system 1 of the embodiment. With reference to Fig. 9, for example, when the configuration example in Fig. 2 is adopted, server device 100-1 includes a table 162 for base 1, server device 100-2 includes a table 162 for base 2, and server device 100-3 includes a table 162 for base 3. In the example of Fig. 9, each of bases 1 to 3 has a similar line, and the data is collected for each process for each line.

Server devices 100-1 to 100-3 respectively include global topics 60-1 to 60-3 as identification information indicating the disposed bases. Global topics 60-1 to 60-3 are used as topic prefixes.

In information processing system 1 of the embodiment, information processing device 300 capable of communicating with at least one of server devices 100 can substantially access the database included in another server device.

That is, the plurality of tables 162 can be integrally processed without making the user aware of which database 160 of server device 100 the plurality of tables 162 in Fig. 9 is stored.

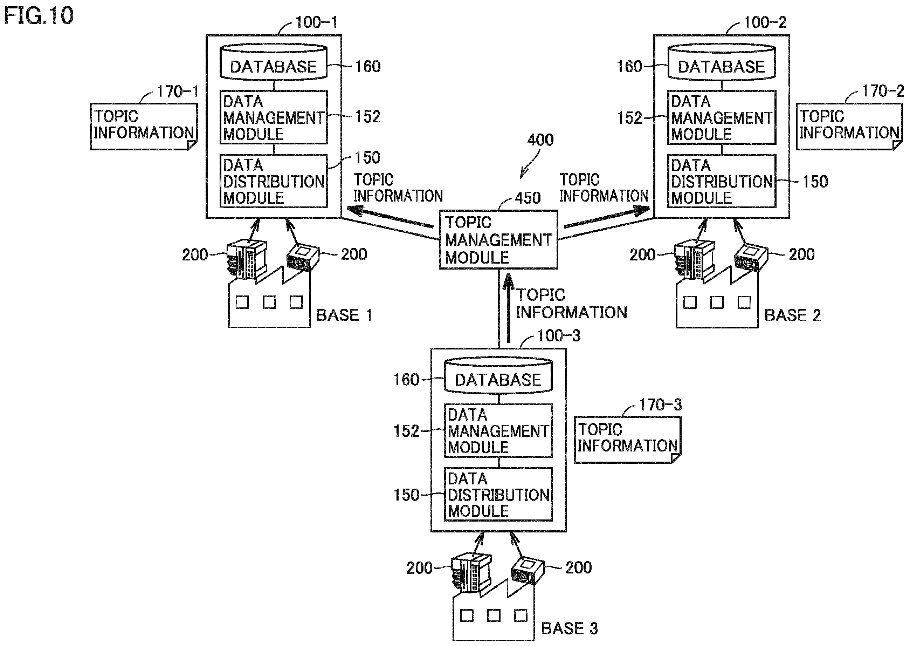

Fig. 10 is a schematic diagram illustrating a functional configuration example implementing data reference processing of information processing system 1 of the embodiment. With reference to Fig. 10, each of server devices 100-1 to 100-3 includes data distribution module 150, data management module 152, and database 160.

Management device 400 includes a topic management module 450. Topic management module 450 manages the topics included in the plurality of databases 160. More specifically, topic management module 450 provides a mechanism that allows another server device 100 to refer to the topics of tables 162 included in the plurality of server devices 100.

More specifically, when receiving the topic information that is the information about the topic of table 162 in any of server devices 100, topic management module 450 transfers the received topic information to another server device 100. Data management module 152 of server device 100 stores the topic information from topic management module 450 of management device 400 in topic information table 170.

In this manner, by sharing the topic information about table 162 included in certain server device 100 with another server device 100, the topic of table 162 included in any server device 100 included in information processing system 1 can be specified.

Fig. 10 illustrates processing in the case where server device 100-3 is newly added while server device 100-1 and server device 100-2 are in operation as an example. Server device 100-3 transmits topic information indicating the topic of table 162 stored in database 160 of the own device to topic management module 450 of management device 400. Topic management module 450 transfers the topic information from server device 100-3 to server device 100-1 and server device 100-2. Server device 100-1 adds the topic information from topic management module 450 to topic information table 170-1, and server device 100-2 adds the topic information from topic management module 450 to topic information table 170-2.

Note that newly added server device 100-3 does not include the topic information about table 162 included in server device 100-1 and server device 100-2. Therefore, server device 100-3 (data management module 152) may request topic management module 450 to transmit the topic information about table 162 included in another server device 100. In this case, the topic information may be acquired from another server device 100 by relay processing of topic management module 450, or the topic information cached by topic management module 450 may be provided to server device 100-3.

As described above, each of server devices 100 holds the topic information, so that the data stored in another server device 100 can be easily accessed.

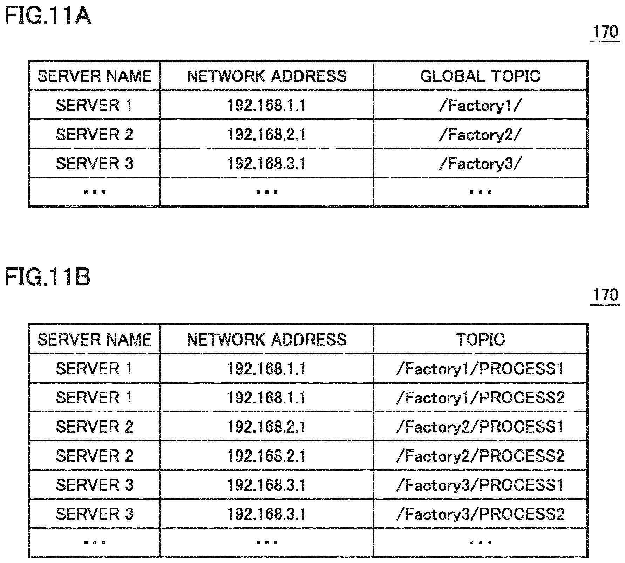

Figs. 11A and 11B are schematic diagrams illustrating an example of topic information table 170 in information processing system 1 of the embodiment. Fig. 11A illustrates an example of storing the global topic (prefix) of the topic assigned to table 162 included in server device 100. Fig. 11B illustrates an example in which all the topics assigned to table 162 included in each of server devices 100 are stored.

With reference to Fig. 11A, each entry of topic information table 170 includes a server name, a corresponding network address, and a corresponding global topic. More specifically, the global topic of the table held by a server 1 is "/Factory1/", the global topic of the table held by a server 2 is "/Factory2/", and the global topic of the table held by a server 3 is "/Factory3/".

Note that each of server devices 100 holds topic information table 170, but the information about the own device may be excluded from topic information table 170. That is, all server devices 100 may hold the same topic information table 170, or may hold topic information tables 170 different from each other in that information of the own device is excluded.

For example, when information processing device 300 instructs server device 100-1 to acquire data corresponding to the topic "/Factory3/process2", server device 100-1 refers to topic information table 170 and specifies server device 100-3 including table 162 to which "/Factory3/" that is the global topic is assigned. Then, server device 100-1 (data distribution module 150) designates "process 2" excluding the global topic, and transmits a data request to server device 100-3.

This is because only the local topics are assigned to each of tables 162 managed by server device 100-3. As described above, data distribution module 150 of server device 100 may request the data from corresponding database 160 except for the topic part (that is, the global topic) uniquely set in the corresponding database in the request designating the topic.

Server device 100-3 provides the data of corresponding table 162 stored in database 160 in response to the data request designating "process 2".

In this manner, in response to the request for designating the topic, data distribution module 150 of server device 100 specifies database 160 corresponding to the designated topic and requests the data from specified database 160. The requested data can be acquired by this series of processing.

As described above, the global topic (prefix) of the table among server devices 100 constituting information processing system 1 is shared, so that arbitrary data stored in another server device 100 can be easily accessed while a data amount of information to be shared can be suppressed.

With reference to Fig. 11B, each entry of topic information table 170 includes a server name, a corresponding network address, and a corresponding topic. More specifically, server 1 includes two tables to which topics "/Factory1/process1" and"/Factory1/process2" are respectively assigned, server 2 includes two tables to which topics "/Factory2/process1" and "/Factory2/process2" are respectively assigned, and server 3 includes two tables to which topics "/Factory3/process1" and "/Factory3/process2" are respectively assigned.

Note that each of server devices 100 holds topic information table 170, but the information about the own device may be excluded from topic information table 170. That is, all server devices 100 may hold the same topic information table 170, or may hold topic information tables 170 different from each other in that information of the own device is excluded.

As illustrated in Fig. 11B, all the topics assigned to the table among server devices 100 constituting information processing system 1 are shared, so that stored server device 100 can be specified without explicitly designating the global topic (prefix) for any topic existing in information processing system 1.

When topic information table 170 in Fig. 11B is adopted, access destination server device 100 can be uniquely specified without separating the global topic (prefix) and the local topic for the designated topic.

In both of Figs. 11A and 11B, when the topics overlap, there is a possibility that the access destination is erroneously specified. Therefore, when a new topic is set or registered in server device 100, a function of checking that the new topic does not overlap with the topic already set or registered in another server device 100 may be adopted.

In this case, topic management module 450 determines whether the same topic as the topic indicated by the topic information already exists in any of the plurality of databases 160. When the same topic exists in any database 160, the overlapping of the topics may be notified to the user or the like.

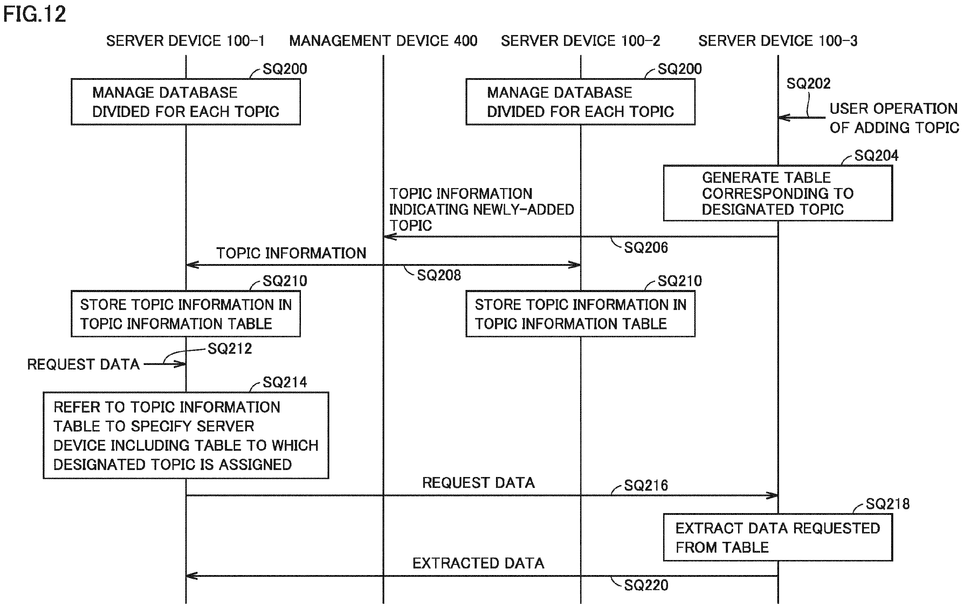

Fig. 12 is a sequence diagram illustrating a processing procedure related to the data reference processing of information processing system 1 of the embodiment. Fig. 12 illustrates the processing procedure corresponding to the data reference processing illustrated in Fig. 10.

With reference to Fig. 12, server device 100-1 and server device 100-2 manage database 160 divided for each topic (sequence SQ200).

When receiving a user operation of adding the topic (sequence SQ202), server device 100-3 generates a table corresponding to the designated topic (sequence SQ204). Then, server device 100-3 transmits topic information indicating the newly added topic to management device 400 (sequence SQ206). As described above, when adding the new topic to associated database 160, data management module 152 of server device 100 transmits the topic information indicating the newly added topic to topic management module 450 of management device 400.

Management device 400 transfers the topic information from server device 100-3 to server device 100-1 and server device 100-2 (sequence SQ208). As described above, when the topic information is received from any of data management modules 152 of the plurality of data management modules 152, topic management module 450 of management device 400 transfers the received topic information to another data management module 152.

Server device 100-1 and server device 100-2 store the topic information from management device 400 in topic information table 170 (sequence SQ210). As described above, when receiving the topic information from topic management module 450, each of the plurality of data management modules 152 stores the received topic information.

The registration to topic information table 170 in the case where the new topic is added is completed through the above processing. The pieces of processing in sequences SQ202 to SQ210 correspond to processing of managing topics included in the plurality of databases 160, and is repeated every time the topic is added.

When receiving a request for data designating a specific topic (sequence SQ212), server device 100-1 refers to topic information table 170 and specifies server device 100 (in this example, server device 100-3) having table 162 to which the designated topic is assigned (sequence SQ214). Then, server device 100-1 transmits the data request to specified server device 100-3 (sequence SQ216).

In this manner, in response to the request for designating the topic, server device 100 (data distribution module 150) specifies the database corresponding to the designated topic, and executes the processing of requesting the data to specified database 160.

In response to the request from server device 100-1, server device 100-3 extracts the requested data from table 162 (sequence SQ218), and transmits the extracted data to server device 100-1 (sequence SQ220).

The provision of the data in response to the data request is completed through the above processing. The pieces of processing in sequences SQ212 to SQ220 are repeated every time the data is requested.

Fig. 10 illustrates the configuration example in which each of server devices 100 holds topic information table 170. Alternatively, topic management module 450 of management device 400 may hold topic information table 170.

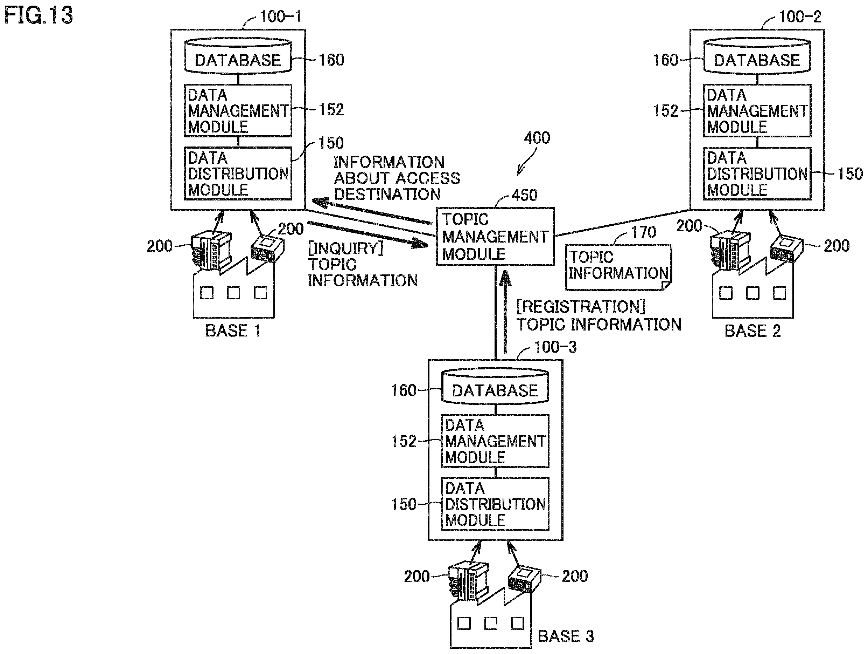

Fig. 13 is a schematic diagram illustrating another functional configuration example implementing the data reference processing of information processing system 1 of the embodiment. In information processing system 1 of Fig. 13, topic management module 450 of management device 400 holds topic information table 170.

With reference to Fig. 13, when any of server devices 100 adds the new topic, the newly added topic is transmitted to topic management module 450. For example, server device 100-3 transmits topic information indicating the topic to be newly added to topic management module 450 ([registration] topic information). Topic management module 450 stores the topic information from server device 100-3 in topic information table 170.

On the other hand, when the data is referred to, server device 100 that receives the request inquires of topic management module 450 about an access destination. For example, when receiving the request for the data specifying any topic, server device 100-1 makes the inquiry to topic management module 450 to specify the access destination corresponding to the topic specified in the request ([inquiry] topic information). In response to the inquiry from server device 100-1, topic management module 450 refers to topic information table 170 to respond with the access destination (network address or the like) corresponding to the designated topic (access destination information). Server device 100-1 specifies target server device 100 according to the access destination responded by topic management module 450, and acquires the data regarding the designated topic.

As illustrated in Fig. 13, when the topic information is received from any of data management modules 152 of the plurality of data management modules 152, topic management module 450 of management device 400 stores the received topic information. When topic management module 450 of management device 400 holds topic information table 170, the topics can be managed in a centralized manner, so that the system configuration can be simplified.

In the above description, the configuration example in which management device 400 (topic management module 450) different from server device 100 is disposed is described as an example, but the configuration example is not limited thereto, but topic management module 450 can be implemented in any form.

For example, topic management module 450 may be disposed in any of server devices 100. In this case, server device 100 including topic management module 450 is responsible for the processing provided by management device 400.

Furthermore, a plurality of topic management modules 450 may be disposed in information processing system 1. In this case, the number of topic management modules 450 may be appropriately designed according to a processing load and the like.

Furthermore, server devices 100 may directly exchange the data (for example, a peer-to-peer configuration). In this case, server device 100 that newly adds the topic notifies all other server devices 100 of topic information indicating the topic to be newly added. Each of server devices 100 updates topic information table 170 held in the own device based on the topic information from another server device 100.

In this manner, a mechanism that allows the topic to be shared among server devices 100 may be implemented in any form.

### <F. Duplication collection processing>

In the above description, the configuration example in which the topic is shared among server devices 100 included in information processing system 1 has been described. Instead of this, or in addition to this, a part or all of duplication of the data collected by another server device 100 may be collected.

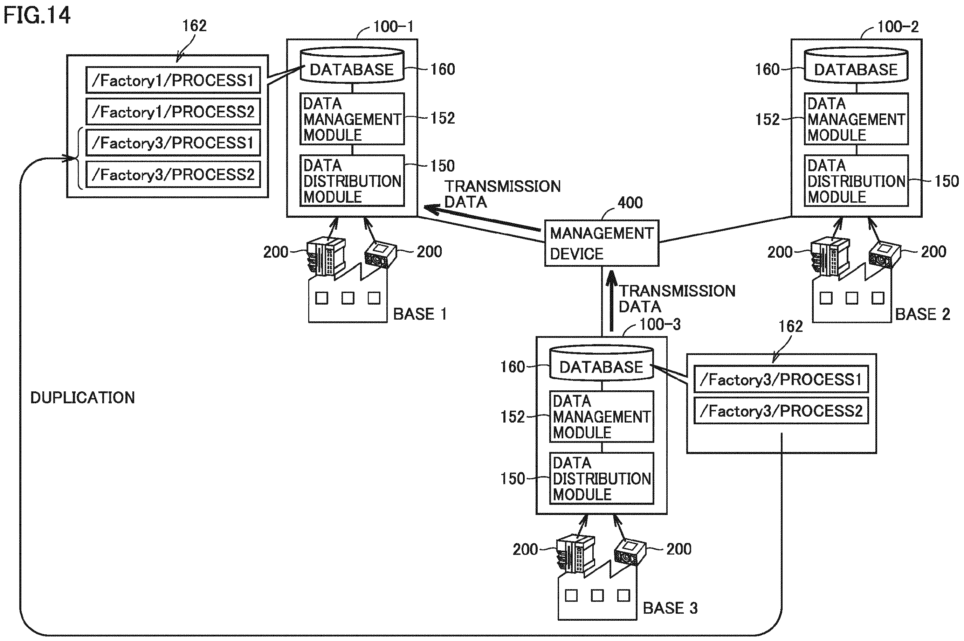

Fig. 14 is a schematic diagram illustrating a functional configuration example implementing duplication collection processing of information processing system 1 of the embodiment. Fig. 14 illustrates an example in which server device 100-3 also collects the duplication of the data collected by server device 100-1.

In this configuration example, server device 100-3 transfers the duplication of transmission data 50 transmitted from transmission device 200 to server device 100-1 through management device 400. Server device 100-3 stores data 54 included in transmission data 50 from transmission device 200 connected to server device 100-3 in table 162. Similarly, server device 100-1 stores data 54 included in transmission data 50 from transmission device 200 connected to server device 100-3 in table 162.

With such the processing, server device 100-1 can store table 162 substantially the same as table 162 stored in database 160 of server device 100-3 in database 160.

By adopting such the processing of collecting the duplication of the data, server device 100 does not need to acquire the data from another server devices 100, and may acquire required data from database 160 of the own device.

Which transmission data to collect may be arbitrarily set by the user with reference to topic information table 170 or the like.

### <G. Totalization function>

When the data collected by arbitrary server device 100 is acquired, server device 100 may perform the predetermined totalization processing and respond the result of the totalization processing.

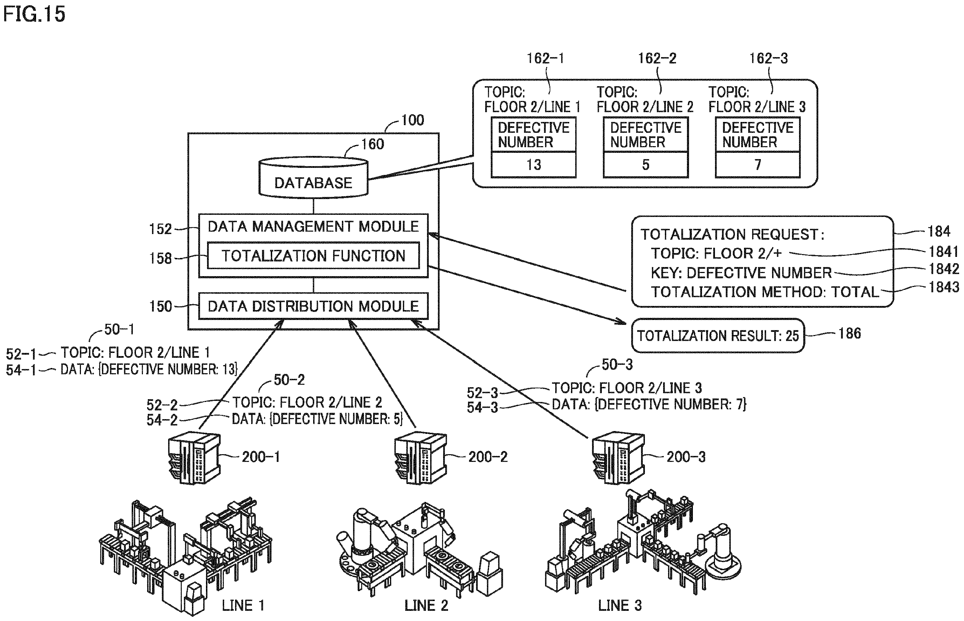

Fig. 15 is a schematic diagram illustrating the totalization processing of information processing system 1 of the embodiment. Fig. 15 illustrates an example in which the totalization is performed such that the total number of defectives of the entire line is designated as a parent topic while the defective number of each line is collected as data associated with a subtopic. The case where three lines of "line 1", "line 2", "line 3" exist on "floor 2" is illustrated as an example.

With reference to Fig. 15, a programmable logic controller (PLC) that controls each line functions as transmission devices 200-1, 200-2, 200-3. Each of transmission devices 200-1, 200-2, 200-3 counts the number of defectives generated in line in charge, and transmits transmission data 50-1, 50-2, 50-3 including the counted number of defectives as data 54-1, 54-2, 54-3 to server device 100.

Each of topics 52-1, 52-2, 52-3 included in transmission data 50-1, 50-2, 50-3 designates a target floor and line in the hierarchical structure. More specifically, topic 52-1 of transmission data 50-1 is "floor2/line1", topic 52-6 of transmission data 50-6 is "floor2/line2", and topic 52-7 of transmission data 50-7 is "floor2/line3".

Database 160 of server device 100 stores tables 162-1, 162-2, 162-3 corresponding to respective topics 52. In tables 162-1, 162-2, 162-3, "floor2/line1", "floor2/line2", and "floor2/line3" are assigned as the topics, respectively. Data management module 152 stores transmission data 50-1, 50-2, 50-3 received from transmission device 200-1, 200-2, 200-3 in table 162 corresponding to topic 52. In the example of Fig. 15, the value of the number of defectives included in data 54 is stored in the column of the "defective number".

Data management module 152 of server device 100 has a totalization function 158. Totalization function 158 of data management module 152 searches and totalizes the data stored in one or more tables 162 in response to a totalization request 184. In particular, totalization function 158 extracts the target data based on the hierarchical structure of the topics, and executes specified totalization processing on the extracted data to generate a totalization result.

Server device 100 receives totalization request 184 that defines the totalization processing. Totalization request 184 includes a topic 1841, a key 1842, and a totalization method 1843 as an example.

"Floor 2/+" is designated as topic 1841. Here, "+" means a wildcard. In this manner, totalization request 184 may include a description using the wildcard designating the target topic. The "defective number" is designated for key 1842, and "total" is designated for totalization method 1843.

Totalization function 158 of data management module 152 extracts the table matched with "floor 2/+" that is designated topic 1841 among tables 162 stored in database 160. That is, "floor2/+" means all tables 162 to which the topic starting with "floor" are assigned, so that tables 162-1, 162-2, 162-3 are extracted as the target.

Then, totalization function 158 of data management module 152 extracts values stored in the column of the "defective number" that is designated key 1842 from extracted table 162.

Finally, totalization function 158 of data management module 152 calculates a sum of the extracted values according to "total" that is designated totalization method 1843. Then, totalization function 158 of data management module 152 responds to the calculated total number of defectives as the totalization result.

In this manner, totalization function 158 of data management module 152 executes the totalization processing designated by totalization request 184 for the plurality of values associated with topic 1841 designated by totalization request 184 in response to totalization request 184.

In this way, by using topic 52 of the hierarchical structure, the totalization processing can be easily realized for a plurality of data sources (for example, a line).

### <H. Modifications>

In the above description, it is assumed that server device 100 can request the data from any other server device 100, but an access authority to each data may be managed. The access authority may be set for each user who requests the data, or may be set for each server device 100.

The management of the access right may be performed by topic management module 450, or information about the access right may be added to topic information table 170 of data management module 152. As described above, any implementation method may be adopted to manage the access authority.

### <I. Advantages>

At the production site, various devices and sensors are distributed, and many workers are distributed as production resources. These are combined to constitute a production system and an organization. Production activities are performed by cooperation of a plurality of production systems and organizations. Production activities at production sites produce not only "things" but also many "data".

Because the data is generated from the distributed production resources, the generated data is also spatially and temporally distributed.

Even when a plurality of databases storing data exist, the information processing system of the embodiment can regard the plurality of databases as an integrated database. Accordingly, the user can access the required data only by designating the target topic without being conscious of the physical configuration of the database or the like. Thus, even when the user does not have specialized knowledge such as the database, the required data can be arbitrarily acquired.

In addition, even when the data collected due to addition, change, or the like of the line at the production site is changed, the changed part can be included in the integrated database, so that collection, analysis, and the like of the required data can be implemented without interruption by following the change at the production site. Thus, improvement of the production site and the like can be more efficiently implemented. Furthermore, a freedom degree of the configuration related to the data collection can be increased, so that an appropriate sensor or the like according to the production site can be easily added.

In addition, it is possible to cope with a situation in which a plurality of server devices needs to be distributed instead of a single server device due to resource restriction of the server device or the like. In the information processing system of the embodiment, the freedom degree in distribution and aggregation of server devices is high, so that the number and disposition locations of the server devices can be freely designed according to resources, requests, and the like.

It should be considered that the disclosed embodiment is an example in all respects and not restrictive. The scope of the present invention is defined by not the above description, but the claims, and it is intended that all modifications within the meaning and scope of the claims are included in the present invention.

## Claims

1. An information processing system (1) comprising:
a plurality of databases (160) divided for each topic;
a topic management unit (450) configured to manage the topic included in the plurality of databases; and
an acquisition unit (150) configured to specify, in response to a request designating the topic, a database corresponding to the designated topic, and request data from the specified database.

2. The information processing system according to claim 1, further comprising:
a transmission unit (250) configured to transmit transmission data (54) that is associated with a topic and that includes data including one or more values to any one of the plurality of databases; and
a plurality of data management units (152) respectively associated with the plurality of databases,
wherein each of the plurality of data management units is configured to store the data included in the transmission data in an associated database based on the topic associated with the transmission data.

3. The information processing system according to claim 2, wherein when a new topic is added to the associated database, the data management unit is configured to transmit topic information indicating the newly added topic to the topic management unit.

4. The information processing system according to claim 3, wherein
when receiving the topic information from any one of the plurality of data management units, the topic management unit is configured to transfer the received topic information to another data management unit, and
when receiving the topic information from the topic management unit, each of the plurality of data management units is configured to store the received topic information.

5. The information processing system according to claim 3, wherein when receiving the topic information from any one of the plurality of data management units, the topic management unit is configured to store the received topic information.

6. The information processing system according to any one of claims 3 to 5, wherein the topic management unit is configured to determine whether same topic as the topic indicated by the topic information already exists in any of the plurality of databases.

7. The information processing system according to any one of claims 1 to 6, wherein the topic is described in a hierarchical structure.

8. The information processing system according to any one of claims 1 to 7, wherein the acquisition unit is configured to request data from a corresponding database except for a topic part uniquely set in the corresponding database in request designating the topic.

9. An information processing method comprising:
managing (SQ200) a plurality of databases divided for each topic;
managing (SQ202 to SQ210) topics included in the plurality of databases; and
in response to a request designating the topic, specifying (SQ212 to SQ220) a database corresponding to the designated topic and requesting data from the specified database.

10. The information processing method according to claim 9, further comprising:
transmitting transmission data (54) that is associated with a topic and that includes data including one or more values to any one of the plurality of databases; and
storing the data included in the transmission data in an associated database based on the topic associated with the transmission data.

11. The information processing method according to claim 10, further comprising:
when a new topic is added to the associated database, transmitting topic information indicating the newly added topic.

12. The information processing method according to claim 11, further comprising:
transferring the received topic information to another database, when receiving the topic information from any one of the plurality of databases; and
storing the received topic information when receiving the topic information.

13. The information processing method according to claim 11, further comprising storing the received topic information when receiving the topic information.

14. The information processing method according to any one of claims 11 to 13, further comprising determining whether same topic as the topic indicated by the topic information already exists in any of the plurality of databases.

15. The information processing method according to any one of claims 9 to 14, wherein the topic is described in a hierarchical structure.
